# EUROPEAN PATENT SPECIFICATION

(11) **EP 1 462 965 B1**
(45) Date of publication and mention of the grant of the patent: **30.09.2015**
(21) Application number: 04012421.6
(22) Date of filing: 15.11.2001
(51) Int. Cl.: G06F 17/50

(54) **Method of manufacturing a distributed control system**
Herstellungsverfahren eines verteilten Steuerungssystems
Procédé de fabrication d'un système de commande distribuée

(30) Priority: 22.12.2000 US 747642
(43) Date of publication of application: 29.09.2004
(62) Divisional of application: 01986505.4
(73) Proprietor: Trane International Inc., New York, NY 10019 (US)
(72) Inventor: Moroney, Brady J., Circle Pines, Minnesota 55014-2459 (US); Shepeck, Matthew A, Holmen, WI 54636 (US); Sanders, Earl O, Holmen, WI 54636 (US); Baines, Mark D, Fountain, CO 80817 (US); Pasvogel, Calvin H., La Crescent, MN 44947-9681 (US); Bricco, Brenda K, Minnesota City, MN 55959 (US)
(74) Representative: Treeby, Philip David William

(56) References cited:
- EP-A- 0 671 289
- US-A- 5 841 654
- US-A- 5 971 581
- SCHICKHUBER GERALD ET AL: "Distributed fieldbus and control network systems" COMPUT CONTROL ENG J; COMPUTING & CONTROL ENGINEERING JOURNAL FEB 1997 IEE, STEVENAGE, ENGL, vol. 8, no. 1, February 1997 (1997-02), pages 21-32, XP002455206
- KANG B LEE ET AL: "Distributed Measurement and Control Based on the IEEE 1451 Smart Transducer Interface Standards" IEEE TRANSACTIONS ON INSTRUMENTATION AND MEASUREMENT, IEEE SERVICE CENTER, PISCATAWAY, NJ, US, vol. 49, no. 3, June 2000 (2000-06), XP011025015 ISSN: 0018-9456

## Description

### Background of the Invention

The present invention is directed to manufacturing, testing, and operating a control platform based on communicating sensors and control devices.

The processes involved in building a chiller range from obtaining the required parts, correctly installing and assembling the parts, and verifying that the chiller was assembled correctly and functions in accordance with the customer's specified requirements. To support these processes, communication connections are needed to component supplier development systems, to sales order entry, to manufacturing method sheets and to manufacturing performance specifications. The information from each of these areas is used throughout the assembly process. Accessibility to this information in a timely manner, and keeping this information up-to-date are crucial to running and maintaining smooth assembly processes.

Presently the process of verifying the assembly process and the final product functionality are very much manual. Paper is used as the primary method to determine the testing functionality and the performance criteria. Mistakes in data entry may go unchecked and remain undiscovered until the product is delivered to the customer site. To correct the problem with the product at the customer site is not only expensive, but it hurts the manufacturer's reputation to deliver a quality product.

Also, today's manual systems do not support coordination between the various "build" stations in the assembly process. What is more, critical components are provided by different suppliers. Without good coordination between the stations and the suppliers, there may be errors, deficiencies or omissions in the functionality of the product. Additionally, without good coordination, a process manufacturing organization structure is difficult to support.

The process becomes more complex if the product includes a communications system including digital controls interconnected by a bus or the equivalent.

Products with digital controls are more expensive and difficult than they need to be. This is because, in the case of specialized equipment, off-the-shelf controllers are not available to meet that product's needs. As a result, a particular company uses its own controllers with custom hardware and fixed configurations of input and output points. This means that for a particular product line selling only 1,000 to 3,000 units a year, the cost of a controller for that product line may provide disproportionately high overhead costs since a controller generally costs between $500,000.00 and a $1,000,000.00 per board to develop. Additionally, development of control circuit boards is slow and costly, inhibiting the development of new or special control features. Moreover, the design life of a particular controller is five to seven years. When any single chip used in such a controller becomes obsolete, the entire controller and the control system may often need redesign. This increases costs for both production controllers as well as costs for supporting service parts.

Furthermore, complex products are sold and configured on a job-by-job basis. As a result, there are many possible system and control configurations. For a single controller to fit all needs, designers are forced to populate controllers with the maximum anticipated capacity to control all potential control points. Thus, most equipment ships with many more control points than the product actually needs.

Moreover, previous control designs consisted of five to ten communicating devices. Although the number of network devices was small, many problems were incurred in factories when the communications network did not function properly. Usually, the factory did not have good tools in which to troubleshoot the network problem, and the assembly line operators would resort to trial and error replacement of electronic modules one at a time until the problem was corrected. Not only is this trial and error approach very time consuming, it often did not correct the root cause of the problem and the customer would therefore receive a product which was marginally working since the root cause was not corrected. Additionally, since good tools did not exist to analyze the communications network, the factory's emphasis was to get the devices communicating. There was no assessment of actual communication signal levels just the result. Although the communications levels were judged adequate at the factory to allow communications, typically when the product was started at the job site, the marginal communications would fail since the signal was lost in the normal electrical noise characteristics of the particular job site. This normal electrical noise need not have been excessive to interfere with a communications system that had no margin for error. A good communication system has a large amount of design margin built in to allow it to operate in a wide variety of environments. Without this margin, the communication systems are susceptible to intermittent performance or total failure. Intermittent performance and total failure problems are difficult and time consuming to troubleshoot in the field, and job sites with these problems received a lot of attention since a product or process was usually inoperable as a result of the intermittent performance or total failure. Also, without good tools in the factory, problems were often not discovered until the final assembly functional test.

In addressing all of these problems, sensors such as temperature, pressure and level sensors and control devices such as valves and actuators have been each packaged with an electronic controller into a new unitary device. For purposes of this application, such a unitary device is referred to as a low level intelligent device or LLID. The low level intelligent devices are installed throughout an industrial product such as an air conditioning chiller system and are interconnected with a four-wire communications bus cable that provides each low level intelligent device with the necessary power and with communication to a main processor for the product.

Each low level intelligent device must be provided with an identity which the low level intelligent device will thereafter use to identify itself when communicating on the communications bus and will use in recognizing communications on a communications bus which are directed to that particular component. Additionally, the electronic control portion of each low level intelligent device must be provided with its appropriate operating parameters. Furthermore, each low level intelligent device on a particular communications bus, the communications bus itself, and the connections of the LLID to the communications bus as well as the identity and operating parameters for each low level intelligent device must be verified and tested to avoid errors in manufacture and operation of the product.

It is also desirable that products include a control platform that does not rely upon large, complex and multi-chip controller boards. It is desirable that the control platform consist of communicating "mini-boards" having only one or two control points and functioning as low level intelligent devices. These low level intelligent devices are building blocks that allow the control system to be configured exactly as required for the product, per the customer's order. The low level intelligent devices are infinitely configurable for new applications, thereby providing a hardware design that need only be designed a single time. Additionally, since the same low level intelligent devices are applied in many different types of units, there can be significantly higher volumes for low level intelligent device than traditional controller boards. These higher volumes allow mass production and lower costs. Since the desired control platform is readily configurable, products can be shipped with only the controls needed for the product's particular application and since the controller is also configurable, the redesign in addition of control points is relatively simple and fast and by breaking the system into "granules", the controllers become less susceptible to obsolence caused by a phase out of any particular component.

What is needed is a versatile tool that, with minimal operator input, will verify proper installation of low level intelligent devices during the manufacturing process by monitoring the electrical integrity of each low level intelligent device and the comm bus as a whole. The tool will also configure each low level intelligent device per customer order and verify the functionality of the low level intelligent device. Monitoring each individual low level intelligent device as it's attached to the comm bus will avoid difficulty when installing subsequent low level intelligent devices or confirming the operation of a communications bus and its components as a whole.

US 5 841 654 discloses a system for configuring a process control system e.g. a Fieldbus network, having intelligent field mounted devices coupled to a data communications bus. A software representation of the process control system to be configured is first designed on a computer. Using the system, the user selects representations of the various field mounted devices to be included in the actual control system. The user then specifies which function blocks of each field mounted device are to be used and how those function blocks are to be linked. The computer is then coupled to the communications bus of the actual control system via an interface device and a configuration and link data are downloaded to the field mounted devices of the control system. The computer can act as a bus master of the configurations bus of the control system with the field mounted devices acting as slaves. The computer can also be disconnected from the control system communications bus and the control system will operate with one of the field mounted devices acting as the bus master.

### Summary of the Invention

It is an object, feature and advantage of the present invention to solve the problems with the prior art.

It is an object, feature and advantage of the present invention to avoid potential errors in low level intelligent device installation that would cause subsequent communication and operational problems.

It is an object, feature and advantage of the present invention to provide a system for manufacturing a product with a communications bus and low level intelligent devices. It is a further object, feature and advantage of the present invention to verify proper installation of each low level intelligent device at the time the device is installed. It is a further object, feature and advantage of the present invention to verify proper installation at the time of installation so as to avoid future difficulties when installing subsequent low level intelligent devices or confirming the operation of the communications bus and its components.

It is an object, feature and advantage of the present invention to provide a single application that confirms that the proper connection and configuration of low level intelligent device occurs at the time of its installation. It is a further object, feature and advantage of the present invention to verify wirings, identity and operating parameters for each low level intelligent device.

It is an object, feature and advantage of the present invention to monitor the integrity of a communications system and the installation of a low level intelligent device communicating by means of a bus. It is a further object, feature and advantage of the present invention to notify an installer immediately upon the introduction of any wiring or device error.

It is an object, feature and advantage of the present invention to improve the efficiency and manufacture of control platforms. It is a further object, feature and advantage of the present invention to avoid a plurality of separately dedicated steps for each installed device. It is a still further object, feature and advantage of the present invention to combine all necessary steps into a two-part process comprising a first step of routing a primary bus cable throughout the product, and a second step of connecting individual low level intelligent devices to the bus cable. It is a still further object, feature and advantage of the present invention to provide a single application which sequences, configures and verifies each low level intelligent devices connection to the bus cable.

It is an object, feature and advantage of the present invention to build a communications system for a product operably controlled by same using a master database to obtain all build and test information. It is a further object, feature and advantage of the present invention to use this master database to provide installation sequence and instructions to a factory technician. It is a still further object, feature and advantage of the present invention to support demand flow manufacturing including factory on-line sequence of event sheets and method sheets. It is yet a further object, feature and advantage of the present invention to accommodate graphics showing details such as the installation area for a particular low level intelligent device. It is a still further object, feature and advantage of the present invention to provide informative alarm messages to aid the factory technician in troubleshooting. It is another object, feature and advantage of the present invention to allow an advanced user to interrogate integrity and power supply integrity using a PC based scope analyzer and voltage magnitude measurement card. It is yet another object, feature and advantage of the present invention to check for failure mode scenarios and provide the factory technician with corrective steps. It is yet another object, feature and advantage of the present invention to allow communications from the factory technician to an installation sequence controller using a remote hand held selector. This remote hand held selector preferably includes a push button allowing the user to advance screens while working on the product at the location of the low level intelligent devices installation. It is yet another object, feature and advantage of the present invention to record failures in a log file for tracking and future quality management.

It is an object, feature and advantage of the present invention to confirm the wiring, identification and operating parameters for each individual low level intelligent device occur properly at the time of installation.

It is an object, feature and advantage of the present invention to automatically download sales order information to a central database to be accessible by all of the various testers, whether inside of or outside of the manufacturer's facilities, thereby ensuring that the correct information is available at the point of use during assembly, manufacture and testing.

It is an object, feature and advantage of the present invention to allow the testers in a manufacturing process to access the central database to obtain any late sales order changes and to incorporate them into the normal assembly process.

It is an object, feature and advantage of the present invention to read part number information stored in the low level intelligence device (hardware and software numbers) and compare the numbers read to numbers stored in a controlled database. Any discrepancy between numbers read from low level intelligence device and numbers stored in database results in enunciation of alarm to user.

It is an object, feature and advantage of the present invention to allow the testers in the manufacturing process to obtain the latest configuration data for the product being assembled, so that the product is setup and assembled exactly in accordance with the customer's ordering instructions.

It is a further object, feature and advantage of the present invention to include options and operating parameters in this configuration data to minimize any setup and commissioning by the customer prior to using, starting or operating the product.

It is an object, feature and advantage of the present invention to provide the exact information needed to assemble a product at the assembly point when the product is there for assembly.

It is a further object, feature and advantage of the present invention to provide a simple identification system to the floor assembler to immediately make available the information needed to build the product.

It is an object, feature and advantage of the present invention to allow for uploads and retention of a particular test during assembly to a centralized database.

It is a further object, feature and advantage of the present invention to maintain a file automatically for each product with the requirements for its assembly and the results of the testing for each step of the assembly.

It is a further object, feature and advantage of the present invention that information and results from one test or one station to be accessed by other test stations to minimize the probability of a particular item being missed or skipped since all testers know or can view the other tester's work.

It is another object, feature and advantage of the present invention to allow the automatic upload of test results into the centralized database to allow a manufacturing engineer to analyze the process and take actions to optimize that process.

It is a further object, feature and advantage of the present invention that the manufacturing engineer have available and be able to analyze the items that failed during the build and test process as well as assembly and testing and subsequently in the field.

It is an object, feature and advantage of the present invention to change the process of manufacturing a communications system from a process where a human controls the process sequence to a process where a computer controls and the process sequence.

It is an object, feature and advantage of the present invention to provide a way to look at communication signals on a communications network and verify that proper signals exist. It is a further object, feature and advantage of the present invention to examine these communication signals and accurately identify any part of the signal that does not meet specification. It is a further object, feature and advantage of the present invention to generate an alarm when a problem is detected and suggest corrective actions to resolve the problem.

It is an object, feature and advantage of the present invention to allow signal analysis of a communications network to be undertaken at various stages of assembly as well as at the final functional tester. It is a further object, feature and advantage of the present invention to minimize the time troubleshooting on an assembly line and therefore keep TAKT times low.

It is an object, feature and advantage of the present invention to eliminate trial and error troubleshooting of communication devices.

It is an object, feature and advantage of the present invention to provide a high level of confidence that a control network is operating with the desired margins when the product is shipped.

It is an object, feature and advantage of the present invention to provide an approach to a localized problem to the testing device itself, a control network master device, any of the control network responding devices, or any of the interconnecting communications media.

It is an object, feature and advantage of the present invention to verify acceptable fanout of each communicating device in a communication system.

It is an object, feature and advantage of the present invention to identify the exact time and exact problem that is introduced into the product being assembled. It is a further object, feature and advantage of the present invention to do this with specificity in a distributed control platform.

According to the present invention, there is provided a method of manufacturing a distributed control system for a product having a plurality of components, each component including a functional portion and a controller portion, the method comprising the steps of: attaching a communications bus to the product; attaching the functional portion of a component to the product and attaching the controller portion of a component to the bus; causing the controller portion to send a self-identifying signal on the bus; receiving the self-identifying signal in a configuring controller; transmitting from the configuring controller to the controller portion a signal including an identifier and operating parameters; receiving the identifier and the operating parameters in the controller portion; and configuring the controller portion in accordance with the identifier and the operating parameters.

Preferred features are set out in the accompanying claims.

In order that the present invention be more readily understood, specific embodiments thereof will now be described.

### Brief Description of the Drawings

Figure 1 is a diagram of a product equipped with a communications bus and components in accordance with the present invention.
Figure 2 is a diagram of a bus and its components in accordance with the present invention.
Figure 3 is a diagram of the product sale to manufacture of a product in accordance with the present invention.
Figure 4 is a flow chart of a method of doing business in accordance with the present invention.
Figure 5 is a diagram of the manufacture and test of the bus and components in accordance with the present invention.
Figure 6 is a flow chart of a method of manufacture of a product in accordance with the present invention.
Figure 7 shows a magnetically actuatable component in accordance with the bus of Figure 5.
Figure 8 shows a communications bus, components and bus signal analyzer in accordance with the present invention.

### Detailed Description of the Invention

The present invention is directed to the manufacture, testing and operation of a communications and control system for a industrial or process product. In the preferred embodiment, such a product is embodied by a chiller system cooling an air conditioning fluid like those used in the HVAC system. Examples of such chiller systems are sold by The Trane Company, a Division of American Standard Inc., under the trademarks CenTraVac™, Cold Generator™ and Series R™. However, a person of ordinary skill in the art will recognize that such a control system including a communications bus and the communicating components connected to that bus are readily applicable to many other products including industrial tractors, construction equipment such as cranes, dump trucks and bulldozers, truck braking systems, sanitation truck control systems, automated factory equipment, medical systems, paper mills, elevator controls, security systems, and other devices with electrical power control, mechanical actuator control, hydraulic pressure control, temperature or pressure control, and/or fluid pressure control. The term 'product' is used generically throughout this application to encompass all such devices as well as the myriad of other devices with similar features or capability.

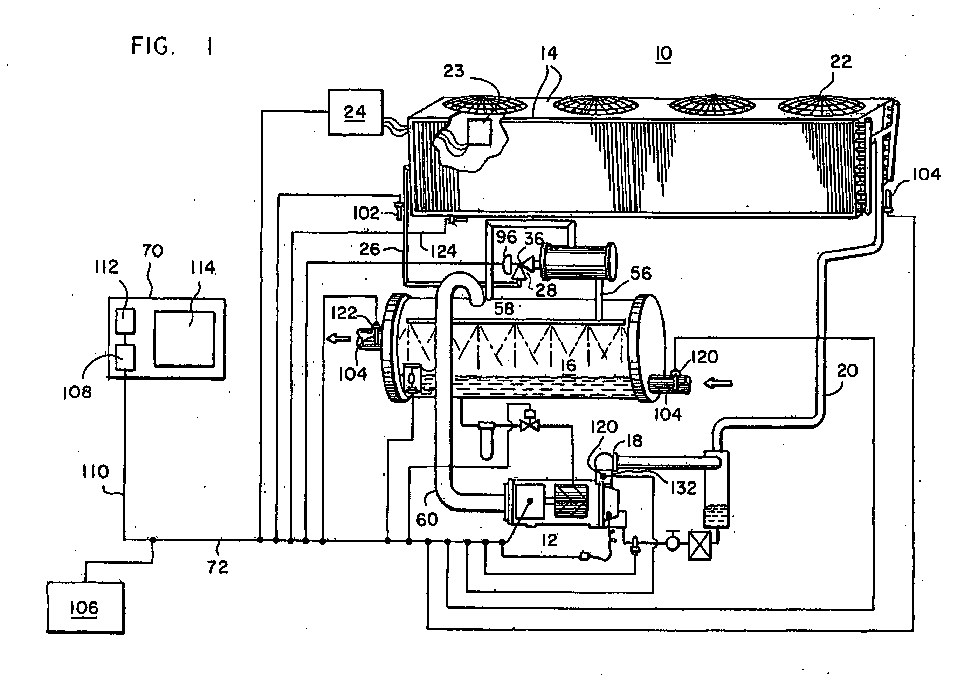

Figure 1 shows a product 10 such as a chiller system for use in providing chilled water for heating, ventilating and air conditioning (HVAC) applications. The chiller is comprised of a compressor 12, a condenser 14 and an evaporator 16. The compressor 12 is preferably a screw compressor whose capacity is controlled by a slide valve 120 but could also be a centrifugal compressor or any other compressor with its respective form of capacity control.

Refrigerant gas is compressed within the compressor 12 and directed out a discharge 18 into piping 20 which connects the compressor 12 to the condenser 14. In the preferred embodiment, the high pressure, relatively hot compressed refrigerant gas delivered to the condenser 14 will be cooled by air moved over the condenser 14 by one or more fans 22, each having a motor 23 controlled by a fan controller 24. The condenser 14 may be cooled in various other ways including the use of a fluid such as city water or the use of a cooling tower.

The heat exchange process occurring within the condenser 14 causes the relatively hot, compressed refrigerant gas to cool condense and pool in the bottom or lower area of the condenser 14. The condensed refrigerant then flows out of the condenser 14 through discharge piping 26 and is next delivered, primarily in liquid form, into the evaporator 16. The transfer of refrigerant from the condenser 14 to the evaporator 16 is controlled by an expansion device 28 such as an expansion valve.

Relatively cool, low pressure liquid refrigerant is delivered to the evaporator 16, where the refrigerant undergoes heat exchange with and cools the relatively warmer medium, preferably such as water, that enters the evaporator 16 through an inlet 56 and exits through an outlet 58. That now cooled medium is, in turn, delivered into heat exchange contact with the heat load which it is the purpose of the chiller to cool.

In the process of cooling the medium which flows through the evaporator 16 and being heated thereby, the liquid refrigerant delivered to the evaporator 16 vaporizes and is directed to piping 60 as a low pressure gas back to the compressor 12. The refrigerant gas is then again compressed in an ongoing and repetitive process whenever the chiller is operational.

The operation of the product 10 is controlled by a controller 70 using a communications bus 72 to communicate with a plurality of components 74, each of which provides digital or analog inputs or outputs associated with the operation of the product 10.

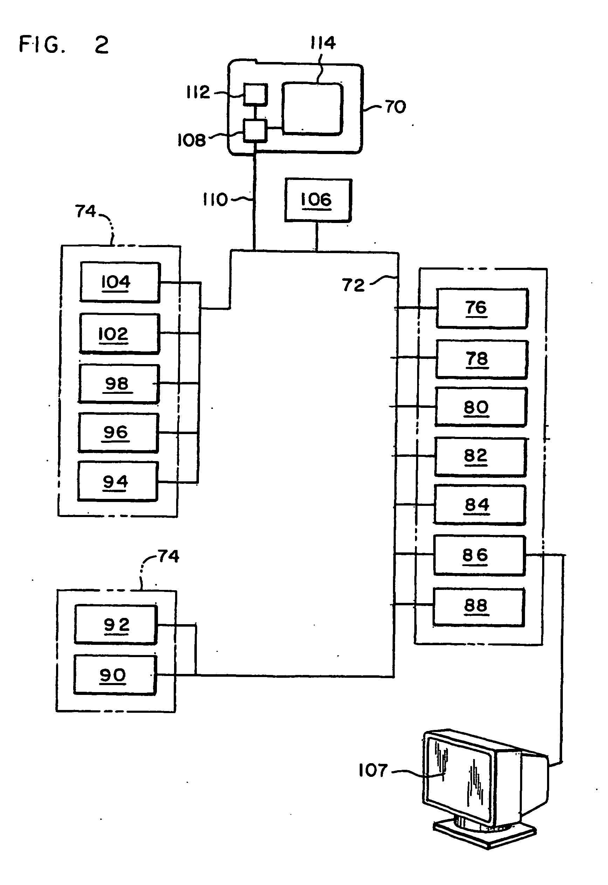

Specifically referencing Figure 2, the variety of components 74 include quad relay outputs 76, dual relay outputs 78, dual triac outputs 80, dual analog I/O 82, dual inverter interfaces 84, Comm 5 communication interfaces 86, starter modules 88, dual high voltage binary inputs 90, dual low voltage binary inputs 92, frame connectors 94, devices such as expansion valves 96, pressure sensors 98, level sensors 102 and temperature sensors 104. The communications interface 86 allows a building automation system 107 to integrate the operation of a product 10 with the operation of other similar or dissimilar products in a common environment. The communications bus 72 is preferably a four wire bus including a power wire supplied by a power supply 106, a common line and two communications lines.

The controller 70 preferably includes a microprocessor 108 operably connected to the bus 72 by a line 110, a memory portion 112 connected to the microprocessor 108, and a user interface 114 allowing the display, reception of, and response to user input.

Now again referencing Figure 1, the communications bus 72 and components 74 of Figure 2 are shown as applied in the simplified form to the product 10 of Figure 1. Temperature sensors 104, 104 respectively measure the entering water temperature 120 and the leaving water temperature 122 of water cooled by the evaporator 16. Pressure sensors 102 measure the pressure 124 within the condenser 14, and temperature sensors 104 measure the temperature 126. The expansion valve 28 is controlled by an expansion valve actuator 96. Additionally, compressor capacity may be controlled by a slide valve controller 132.

As described in the Background section, the installation, verification and configuration of a plurality of low level intelligent devices provides a plethora of opportunities for error. Operator error can be substantially reduced by limiting the number of human inputs, by cross checking each installation step, and integrating and reducing the number of installation steps.

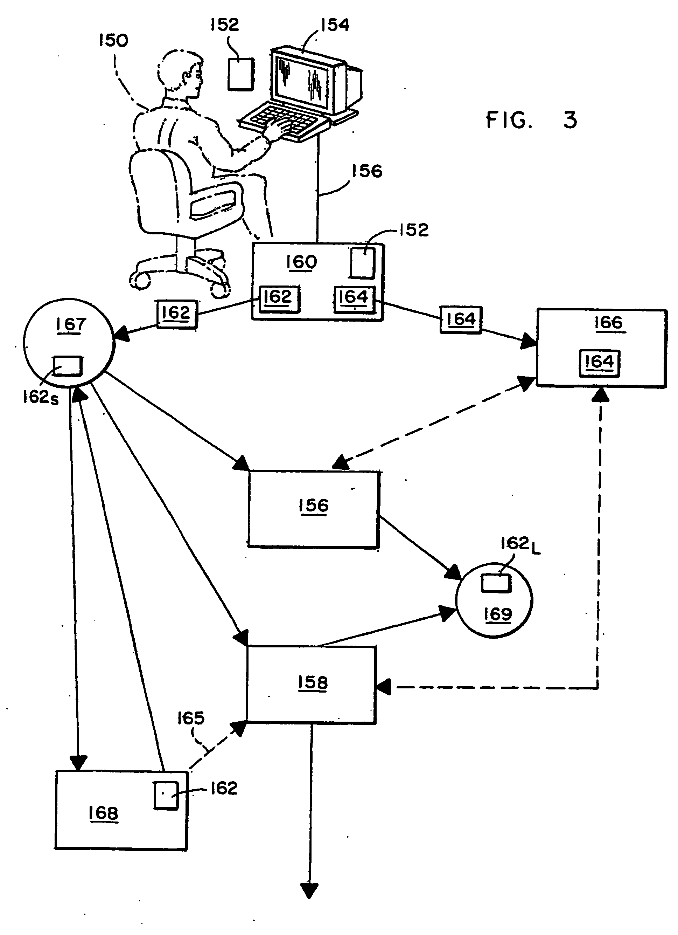

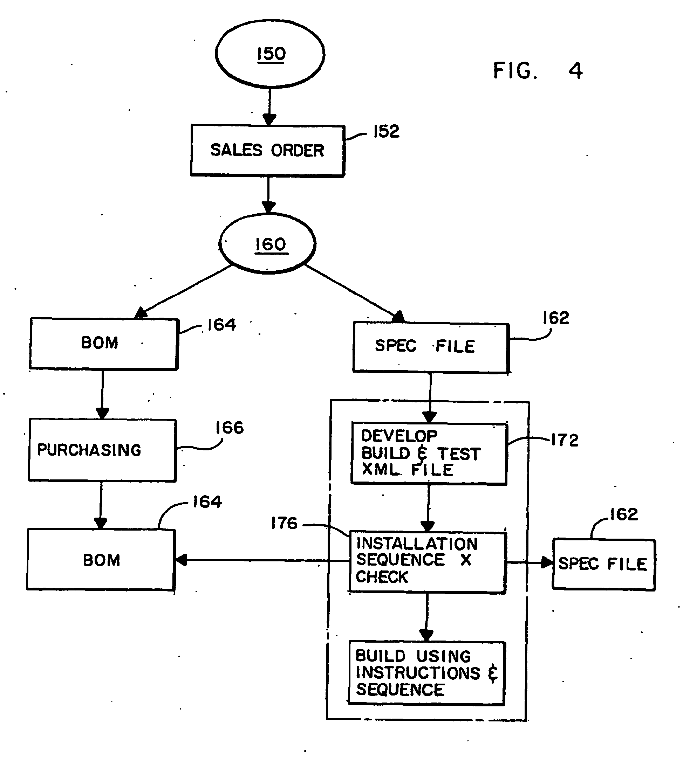

Figures 3 and 4 are a diagram of the build sequence of a product 10 in accordance with the present invention.

Figure 3 starts with a salesman 150 entering an order 152 for a product 10 into a personal computer 154 or the like and transmitting that order 152 by any conventional communication means 156 (including the internet) to a coordinating operation 160. The coordinating operation 160 receives the order 152, and generates a specification 162 and a bill of materials 164.

The specification 162 describes how the parts and components are generally assembled into the product 10. The specification 162 is stored as an electronic build document, preferably as XML format, on a server 167 with intranet and/or dialup communication access capabilities. For purposes of this application, letter codes are occasionally attached to the specification's reference numeral 162, but the reference numeral 162 is intended to encompass all versions of the specifications.

The bill of materials 164 identifies each part and component necessary to build the product 10 identified by the order 152. The bill of materials 164 is typically forwarded to a purchasing department 166 some period of time prior to actual manufacture of the product 10 so that the purchasing department 166 can ensure that the requisite number of parts and components are available when needed for manufacture.

Storing the specification 162s on the server 167 with internet capabilities allows the specification 162s to be accessed by various component suppliers 168. The component suppliers 168 access the specification 162, build a particular component or subassembly in accordance with the specification 162, and test the operation of the component or subassembly. The test results are appended to the specification 162 and returned to the server 167. Alternatively, the specification 162 could be forwarded directly to another component manufacturer to initiate the manufacture of another component, or could be forwarded to the product manufacturer for final assembly (see dashed line 165).

At some point, the various required components and subassemblies are completed, the results of their testing recorded in the specification 162, and the purchasing department 167 has acquired the necessary materials as detailed on the bill of materials 164 in order to complete a final assembly of the product 10.

In such case, the specification 162 with all component and subassembly test results is forwarded to a manufacturing unit 156 to assemble the product 10, to attach the communications bus 72 and the components 74 to the product 10, and to test and configure the bus 72 and the components 74 both individually and as part of a cohesive hole in the product 10. The results of such testing and verification are appended to the specification 162 and stored in a local server database 169. Prior to final shipment, the specification 162L stored on the server 169 is downloaded to the manufacturing location (usually the same manufacturing location but now indicated by reference numeral 158 for the sake of clarity).

While assembly of parts, components, subassemblies and the final assembly occurs, the version of the specification 162 stored on the server 167 (162s) can be updated by "last minute" order changes from the customer. The version of the specification 162 on the server 167 (162L) is therefore compared with the version of the specification stored on the local server 169 (162s) to determine if the addition of any components 74 or modifications to the product 10 are required. These modifications are made if necessary, and the components 74 are configured and verified and tested. The results are then appended to the specification 162 as integrated between the versions stored on the server 167 and the local server 169 (162s, 162L). The product 10 is then shipped to the customer.

Figure 4 illustrates the manufacture and test of the bus 72 and component 74 in accordance with the present invention as may occur at a component manufacturer 166 or at the manufacturing location 156, 158.

The specification 162 is provided to a tester device 170 which generates build and test instruction 172 for building the desired product 10. These build and test instructions 172 are preferably in the Java XML format as implemented in an XML file. The tester device 170 takes the XML file and generates installation sequence instructions 176 for the actual manufacture of the product 10. Both the XML file 174 and the installation sequence file 176 are cross checked with the specification 162 and with the bill of materials 164 for discrepancies, errors, or omissions. Once this cross check is completed, the actual manufacture of the product 10 can be commenced. The tester device 170 builds the product 10 using the installation sequence 176.

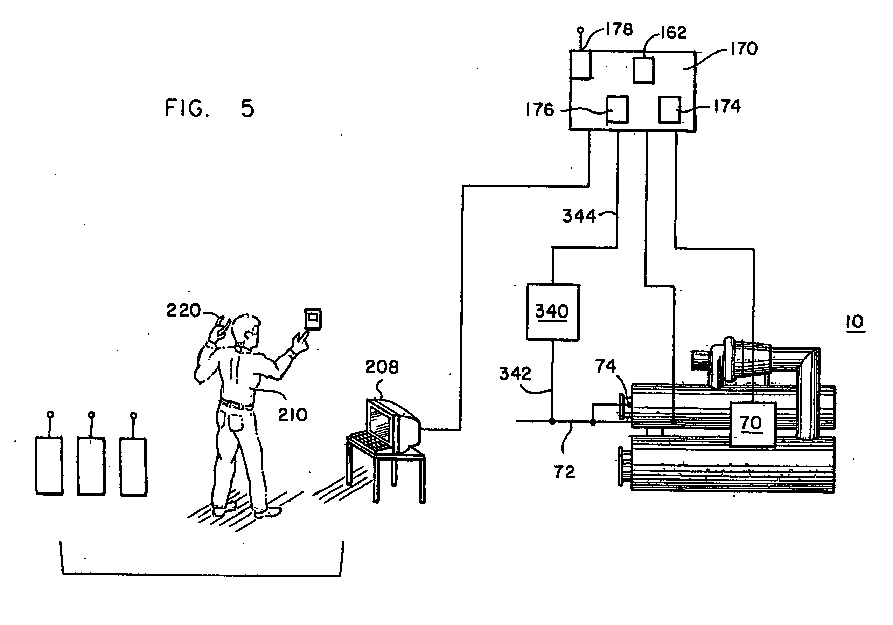

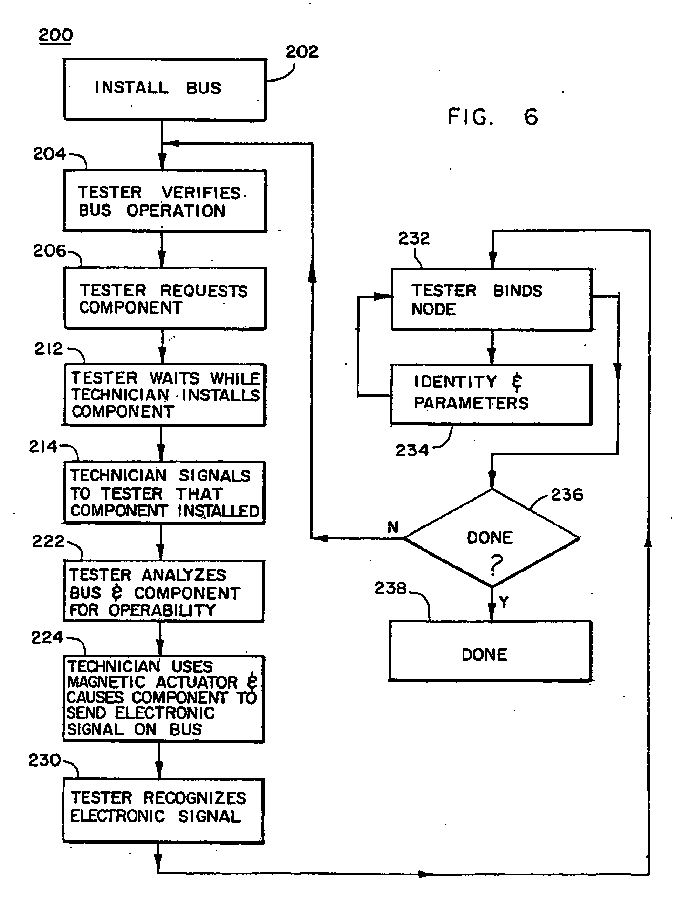

Figures 5 and 6 show a flow chart 200 directed to the manufacture of a product 10 by the tester device 170. Although the actual manufacture of a product 10 includes the construction and assembly of the compressor 12, evaporator 16 and condenser 14 as well as many other parts, the present invention is directed to the addition thereto of the bus 72 and its components 74 and the configuration, verification, testing and control thereof. Thus the flow chart 200 starts with the installation of the bus 72 into the product 10 as indicated by element 202 of the flow chart 200.

Once the communications bus 72 has been installed on the product 10, the tester device 170 verifies the operation of the bus at step 204. Once the bus operation has been verified, the tester device 170 requests the next individual component 74 which the installation sequence 176 indicates should be installed. This is done at step 206 of the flow chart 200. To make the request, the tester device 170 sends a signal to a display device 208 to provide a visual indication to a factory technician 210 as to the desired component 74. Step 212 indicates that the tester device 170 waits while the technician 210 installs the requested component 74 on the product 10 and physically connects the component 74 to the bus 72.

At step 214 the technician 210 generates a signal to the tester device 170 indicating that the component 74 has been installed. In one form of the invention, the signal is a garage door type radio signal transmitted to a receiving section 178 of the tester device 170, identifying to the tester device 170 that the requested component 74 has been installed. In a second embodiment of the invention, the technician 210 uses a magnet actuator 220 such as a magnet or a magnetic field generator to cause the component 74 to send a signal on the bus 72 indicating to the tester device 170 that a component 74 has been added. This magnetic actuation of a signal is subsequently described.

Once the tester device 170 has received the signal from the technician 210, the tester device 170 proceeds to step 222 and analyzes the bus 72 and the new component 74 for operability. In the first embodiment discussed above where the technician 210 uses a radio transmitter, the tester device 170 generates a further signal to the technician 210 indicating the technician 210 should use the magnetic actuator 220. A visual or audio trigger is used to signal the technician 210 to generate step 224 and cause the component 74 to either send the electronic signal on the bus 72 or place the component 74 into a mode where it can be programmed. The technician 210 again signals the tester device 170 to indicate completion of task. In all cases, the tester device 170 recognizes the signal from the newly installed component 74 at step 230.

At step 232 the tester device 170 then binds the component 74 as a node in the control system for the product 10. Binding the node is a term in the industry indicating that the tester device 170 gives the component 74 a unique identity which the component 74 can use for transmitting and receiving messages on the bus 72. The binding of a node also encompasses the tester device 170 determining the type and functionality of component 74 that has been installed (usually from the specification 162) and providing the appropriate operating parameters to the component 74 by means of the bus 72 as indicated by step 234.

At step 236, the tester device 170 checks the installation sequence 176 to determine whether all components 74 have been installed. If not, the sequence of flow chart 200 is again started at step 204. If each component has been installed, then the tester device 170 completes operation at step 238 and appends the test results to the specification 162.

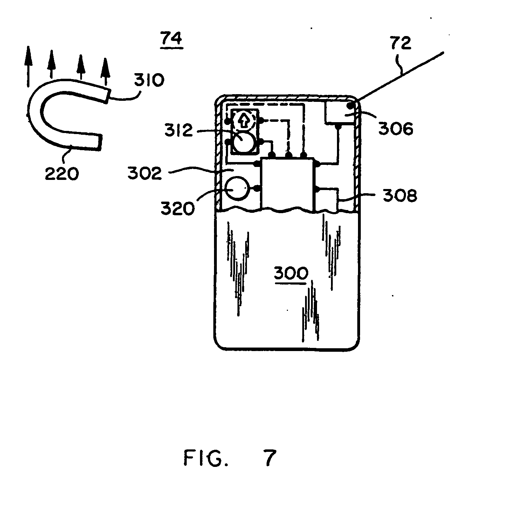

Referring to Figure 7, each component 74 includes a functional portion 300 and a control portion 302. The functional portion 300 may be any digital or analog input or output conventionally used to control product 10 including the multiplicity of components 74 described above. The control portion 302 includes a microprocessor 304, and an external communications port 306 operably connecting the microprocessor 304 to the communications bus 72. The microprocessor 304 includes an operable connection to the functional portion 300 allowing the control portion 302 to transfer digital or analog input or output to or from that functional portion 300. The control portion 302 also includes a non-invasive actuating device 310 operably connected to the microprocessor 304. Although there are a number of available non-invasive techniques, applicant prefers a normally open or normally closed (normally closed is shown) circuit which includes an element 312 movable by means of a magnetic field actuated by the magnetic actuator 220. The technician 210 can use the magnet actuator 220 to move the element 312 from its normally closed position to an open position breaking the signal provided to the microprocessor 304 (or in the normally open position closing the circuit and providing a signal to the microprocessor 304). In either case, this signal change is recognized by the microprocessor 304.

In one embodiment, the microprocessor 304 then examines a memory portion 320 to determine if the microprocessor 304 has already been provided with and has recorded an identity and operating parameters. If the microprocessor 304 does not already have an identity and operating parameters in its memory portion 320, then the control portion 302 generates a signal on the communications bus 72 to the tester device 170 indication that the microprocessor 304 is a new node to be bound to the system. The control portion 302 then awaits a return signal from the testing device 170 providing the requisite identity and operating parameters. However, if the microprocessor 304 determined that an identity and operating parameters have already been received, then the signal from the actuating device 310 is ignored.

In another preferred embodiment, the control portion 302 always places itself in programming mode if the element 312 detects a magnetic filed. In this embodiment, the tester device 170 or controller 70 always queries a component 74 to ascertain if it has been programmed before the tester device 170 or controller 70 issues programming instructions.

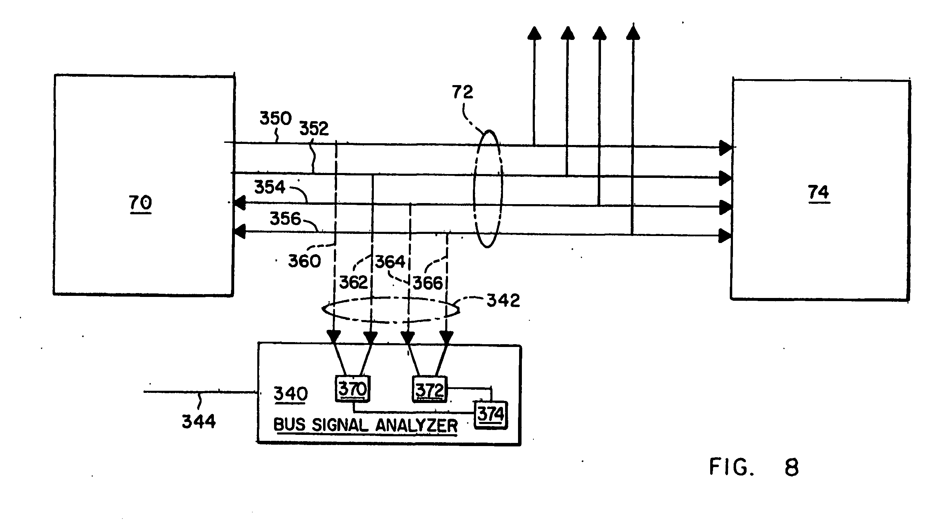

Figure 8 shows the communications bus 72, the controller 70, a component 74, and a bus signal analyzer 340 electrically connected to the communications bus 72 by a flat ribbon cable 342. The bus signal analyzer 340 is also electrically connected to the tester device 170 by an electrical connection 344.

The communications bus 72 is shown in its preferred embodiment of a four wire flat ribbon cable including a 24 VDC line 350, a ground line 352, a communications plus line 354 and a communications minus line 356. Preferably, the lines 350, 352 are of a first larger gauge wire while the lines 354, 356 are of a second lesser gauge wire.

The ribbon cable 342 is similarly comprised of a connection 360 to the 24 VDC line, a connection 362 to the ground line, a connection 364 to the communications plus line, and a connection 366 to the communications minus line of the bus 72. This allows the bus signal analyzer 340 to monitor each of the lines 350, 352, 354 and 356 independently and in combination. Preferably, the bus signal analyzer 340 is physically attached to the bus 72 between the controller 70 and the component(s) 74 of the communications bus 72. The bus signal analyzer 340 includes scope 370 and voltage meter 372 instruments as well as a personal computer 374 which receives signal information from these instruments 370, 372.

More specifically, the 24 VDC and ground signals 350, 352 of the communications bus 72 are brought into the meter instrument 370 by lines 360, 362 so that aspects of these signals may be analyzed. Specifically, the meter instrument 370 determines DC voltage magnitude as well as the AC component carried by the lines 350, 352. The DC voltage magnitude and the AC component are compared to acceptable high and low ranges stored in the PC 374 as database values. Each 24 VDC and ground signal has its own set of limits, and each signal is analyzed to determine if the signal is acceptable and, if not, which signal parameters are out of specification. The signals are also examined as a group to more intelligently pinpoint the root cause of a potential problem.

Similarly, the plus and minus communications lines 354, 356 are brought into the scope instrument 372 as indicated by lines 364, 366. This enables the communications plus and minus signals to be parsed or segregated very finely to allow detailed analysis of their structure. Additionally, the magnitudes of each of the plus and minus communication signals are examined and compared to predetermined acceptable ranges. Since the preferred embodiment of the communications bus and its protocol is implemented as RS485, various aspects of the communications plus and minus signals are looked at and compared to specified acceptable ranges. For RS485, the differential signal is key to proper communications and the acceptable range is not the limits per RS485 (which can be as low as 0.2 volts differential) but rather the design limits of the controller 70 and components 74 used. The bus signal analyzer 340 verifies that the signals are within these design limits which carry significant margin above what RS485 requires. This ensures robust field operation when applied to environments with wide variations in noise.

The communication signals 354, 356 are also looked at for proper common load characteristics. The magnitude of the communications plus and minus signals are looked at with respect to ground. Even though the RS485 specification allows for huge variations in common mode values since RS485 really only cares about the differential, the limits for common mode operations are held very tightly, in fact far tighter than what RS485 specifications require. Empirical knowledge of the communications circuitry involved is used to determine these acceptable ranges. The common mode values vary only so much based upon leakages, tolerances, fanout and other parameters including the design characteristics. Variances indicate from the common mode values causes the bus signal analyzer 340 to generate an alarm even though communications are good as far as the RS485 specifications are concerned. Using the information connected from all signals, the root cause solution is determined and annunciated to an operator such as the assembly technician 210.

The bus signal analyzer 340 also examines differential and common load aspects of the signal in each of the logic 1 and logic 0 states since different problems manifest differently. By looking at both states and including these in the signal analysis, a root cause is more clearly identified as well as minimizing the probability of an undetected problem. The bus signal analyzer 340 also distinguishes the signals being driven by the controller 70 and the component 74. Since the bus signal analyzer 340 is directly communicating but at line 344 with the tester device 170, the bus signal analyzer 340 knows which component 74 is communicating at any particular time. Thus the signals from that component 74 may be directly analyzed and the identification and annunciation of any problems occurs immediately.

The bus signal analyser 340 continually monitors the bus so that if the connection of a component 74 to the bus 72 results in the bus 72 going out of specification, immediate annunciation of the problem occurs and the problem is identified immediately.

It will be apparent to a person of ordinary skill that many modifications and alterations are contemplated in the present device and invention. Such modifications and alterations include application to the wide variety of other devices, the modification of the bus 72 to forms other than a flow wire system including fibre-optic, coaxial cable, wireless and other forms of communication. All such modifications or alterations are contemplated to fall within the scope of the claims.

## Claims

1. A method of manufacturing a distributed control system for a product (10) having a plurality of components (74), each component including a functional portion and a controller portion (70), the method comprising the steps of:
attaching a communications bus (72) to the product (10);
attaching the functional portion of a component to the product (10) and attaching the controller portion (70) of a component to the bus (72);
causing the controller portion (70) to send a self-identifying signal on the bus (72);
receiving the self-identifying signal in a configuring controller;
transmitting from the configuring controller to the controller portion a signal including an identifier and operating parameters;
receiving the identifier and the operating parameters in the controller portion; and
configuring the controller portion (72) in accordance with the identifier and the operating parameters.

2. The method of claim 1, including the further steps of testing the operation of the component (74) and the bus (72) and storing the results in an electronic build file.

3. The method of claim 2, wherein the causing step includes the further step of magnetically signalling the component (74).

4. The method of claim 2, including making the operable connections and communicating such to a test controller (170) using a plurality of wireless communications medium.

5. The method of claim 4, wherein the method further comprises the step of providing a visual instruction to a user indicating the next component (74) to be attached, and inputting a wireless signal to the test controller (170) once attachment has been completed.

6. The method of claim 5, wherein the wireless signal is a radio frequency signal.

7. The method of claim 5, wherein the configuring controller confirms receipt of the wireless signals through the use of an audible tone.

8. The method of claim 7, wherein subsequent to the audible tone, applying a magnetic signal to the component.

9. The method of claim 8, wherein the receipt of a magnetic signal by the component causes the component to transmit a request for an identity on the bus (72).

## Patentansprüche

1. Verfahren zur Herstellung eines verteilten Steuerungssystems für ein Produkt (10) mit mehreren Komponenten (74), wobei jede Komponente einen Funktionsteil und einen Controller-Teil (70) umfasst, wobei das Verfahren folgende Schritte enthält:
Anhängen eines Kommunikationsbusses (72) an das Produkt (10);
Anhängen des Funktionsteils einer Komponente an das Produkt (10) und Anhängen des Controller-Teils (70) einer Komponente an den Bus (72);
Verursachen, dass der Controller-Teil (70) ein sich selbst identifizierendes Signal auf dem Bus (72) sendet;
Empfangen des sich selbst identifizierenden Signals in einem konfigurierenden Controller;
Senden eines Signals umfassend eine ID und Betriebsparameter von dem konfigurierenden Controller an den Controller-Teil;
Empfangen der ID und der Betriebsparameter im Controller-Teil; und
Konfigurieren des Controller-Teils (72) gemäß der ID und den Betriebsparametern.

2. Verfahren nach Anspruch 1, umfassend die weiteren Schritte des Testens des Betriebs der Komponente (74) und des Busses (72) und Speichern der Ergebnisse in einer elektronischen Build-Datei.

3. Verfahren nach Anspruch 2, wobei der verursachende Schritt den weiteren Schritt zum magnetischen Signalisieren der Komponente (74) umfasst.

4. Verfahren nach Anspruch 2, umfassend das Erstellen der betreibbaren Verbindungen und das Kommunizieren derselben an einen Test-Controller (170) mithilfe von mehreren drahtlosen Kommunikationsmedien.

5. Verfahren nach Anspruch 4, wobei das Verfahren ferner den Schritt des Bereitstellens einer visuellen Anweisung für einen Benutzer zum Angeben der nächsten Komponente (74), die angehängt werden soll, und das Eingeben eines drahtlosen Signals in den Test-Controller (170) umfasst, sobald das Anhängen abgeschlossen ist.

6. Verfahren nach Anspruch 5, wobei das drahtlose Signal ein Funkfrequenzsignal ist.

7. Verfahren nach Anspruch 5, wobei der konfigurierende Controller den Empfang der drahtlosen Signale durch die Verwendung eines hörbaren Tons bestätigt.

8. Verfahren nach Anspruch 7, wobei nachfolgend auf den hörbaren Ton ein magnetisches Signal auf die Komponente angewendet wird.

9. Verfahren nach Anspruch 8, wobei der Empfang eines magnetischen Signals durch die Komponente verursacht, dass die Komponente eine Identitätsanforderung auf dem Bus (72) überträgt.

## Revendications

1. Procédé de fabrication d'un système de commande réparti pour un produit (10) comportant une pluralité de composants (74), chaque composant comprenant une partie fonctionnelle et une partie de dispositif de commande (70), le procédé comprenant les étapes consistant à :
fixer un bus de communications (72) au produit (10) ;
fixer la partie fonctionnelle d'un composant au produit (10) et fixer la partie de dispositif de commande (70) d'un composant au bus (72) ;
faire envoyer par la partie de dispositif de commande (70) un signal d'auto-identification sur le bus (72) ;
recevoir le signal d'auto-identification dans un dispositif de commande de configuration ;
transmettre du dispositif de commande de configuration à la partie de dispositif de commande un signal comprenant un identifiant et des paramètres de fonctionnement ;
recevoir l'identifiant et les paramètres de fonctionnement dans la partie de dispositif de commande ; et
configurer la partie de dispositif de commande (72) en fonction de l'identifiant et des paramètres de fonctionnement.

2. Procédé selon la revendication 1, comprenant les étapes supplémentaires consistant à tester le fonctionnement du composant (74) et du bus (72), et à mémoriser les résultats dans un fichier de construction électronique.

3. Procédé selon la revendication 2, dans lequel l'étape consistant à provoquer l'envoi comprend l'étape supplémentaire de signalisation magnétique du composant (74).

4. Procédé selon la revendication 2, comprenant la réalisation des connexions opérationnelles et la communication de celles-ci à un dispositif de commande de test (170) à l'aide d'une pluralité de supports de communications sans fil.

5. Procédé selon la revendication 4, dans lequel le procédé comprend de plus l'étape de délivrance d'une instruction visuelle à un utilisateur, indiquant le composant suivant (74) à fixer, et d'entrée d'un signal sans fil sur le dispositif de commande de test (170) une fois que la fixation a été achevée.

6. Procédé selon la revendication 5, dans lequel le signal sans fil est un signal haute fréquence.

7. Procédé selon la revendication 5, dans lequel le dispositif de commande de configuration confirme la réception des signaux sans fil à l'aide d'une tonalité audible.

8. Procédé selon la revendication 7, dans lequel, après la tonalité audible, il est appliqué un signal magnétique au composant.

9. Procédé selon la revendication 8, dans lequel la réception d'un signal magnétique par le composant provoque la transmission par le composant d'une demande d'une identité sur le bus (72).
